## Europäisches Patentamt
## European Patent Office
## Office européen des brevets

(19)

(11) Veröffentlichungsnummer: **0 260 704**
**B1**

(12) **EUROPÄISCHE PATENTSCHRIFT**

(45) Veröffentlichungstag der Patentschrift:
27.06.90

(51) Int. Cl.⁵: **B01J 35/04**

(21) Anmeldenummer: 87113655.2

(22) Anmeldetag: 18.09.87

(54) Katalysatorformkörper sowie Verfahren und Vorrichtung zu seiner Herstellung.

(30) Priorität: 19.09.86 DE 3632322

(43) Veröffentlichungstag der Anmeldung:
23.03.88 Patentblatt 88/12

(45) Bekanntmachung des Hinweises auf die Patenterteilung:
27.06.90 Patentblatt 90/26

(84) Benannte Vertragsstaaten:
AT BE CH DE ES FR GB GR IT LI LU NL SE

(56) Entgegenhaltungen:
EP-A- 0 237 291
DE-A- 3 001 640
FR-A- 2 336 164
US-A- 3 963 504
US-A- 4 063 955

PATENT ABSTRACTS OF JAPAN, Band 10,
Nr. 199 (C-359)[2255], 11. Juli 1986; & JP-A-61 42 334

(73) Patentinhaber: Dr. C. Otto Feuerfest GmbH,
Dr.-C.-Otto-Strasse 222, D-4630 Bochum 5(DE)

(72) Erfinder: Hartmann, Walter, Am Ruhrort 13,
D-4630 Bochum 5(DE)
Erfinder: Heumüller, Martin, Gartenstrasse 89,
D-4630 Bochum 6(DE)
Erfinder: Koschlig, Hans-Joachim, Dr. Ing., Am
Schamberge 8, D-4630 Bochum 5(DE)
Erfinder: Kunkel, Willi, Am Sattelgut 12,
D-4630 Bochum 5(DE)

(74) Vertreter: Kaiser, Henning, SALZGITTER AG Patente
und Lizenzen Kurfürstendamm 32 Postfach 15 06 27,
D-1000 Berlin 15(DE)

EP 0 260 704 B1

**Beschreibung**

Die Erfindung betrifft einen großformatigen Katalysatorformkörper wabenförmiger Struktur aus einem gebrannten keramischen Scherben, wobei der Scherben die katalytisch aktive Substanz enthält oder trägt. Solche Katalysatorformkörper haben übliche Abmessungen von z. B. über 50 cm Länge und über z. B. 80 cm² Querschnittsfläche.

Unter dem Begriff "wabenförmige Struktur" soll im Rahmen der Erfindung ganz allgemein die Struktur von Formkörpern verstanden werden, die eine Vielzahl von nebeneinander angeordneten, insbesondere parallel verlaufenden, durchgehenden Kanälen aufweist, die aus stegartigen Zellenwänden gebildet werden und durch diese Zellenwände voneinander abgeteilt sind. Solche Formkörper werden auch Wabenkatalysatoren genannt. Dieser Begriff wird der Einfachheit halber im folgenden verwendet.

Durch Extrudieren eines nicht näher beschriebenen Materials hergestellte Festkörperkatalysatoren von wabenförmiger Struktur sind aus DE-PS 30 46 921 bekannt. Nach DE-PS 22 10 438 werden keramische Trägerkörper mit durchgehenden Kanälen aus einer Masse mit durch Verbrennen Poren bildenden Stoffen, insbesondere Graphit durch Einpressen von Stiften in einem vorgepreßten Block erzeugt. Nach dem Brennen liegt eine Gesamtporosität von 30 bis 60 % bei Porendurchmessern unter 20$\mu$m vor. Die durch die Stifte geformten Kanäle haben einen Durchmesser von etwa 1 mm und machen nur 30 bis 50 % der Querschnittsfläche der Träger aus. Die Trägerkörper ergeben daher einen sehr großen Strömungswiderstand, und es besteht die Gefahr, daß die engen runden oder polygonalen Kanäle verstopfen.

Wabenkatalysatoren der erfindungsgemäßen Art, die insbesondere zur Entfernung von Stickoxiden aus Abgasen mit Ammoniakgas dienen, werden z. B. in der DE-PS 26 58 593 beschrieben. Der bekannte Wabenkatalysator ist hinsichtlich seiner Raumform derart optimiert, daß die aus den Kanälen gebildete offene Frontalfläche mit dem hydraulischen Durchmesser der Kanäle und der Abgasgeschwindigkeit korrespondiert, so daß eine Verstopfung der Kanäle durch Ruß und/oder Staub vermieden wird und die Denitrierung einen Höchstwert erreicht. Als oberer Grenzwert für die offene Frontalfläche ist ein Wert von 80 % festgestellt worden, weil bei Überschreitung dieses Wertes die aus einem keramischen Werkstoff bestehenden, massiven Zellenwände zwischen zwei benachbarten Kanälen keine ausreichende mechanische Festigkeit mehr aufweisen würden. Der Grenzwert für die offene Frontalfläche, die der Summe der offenen Kanalquerschnitte entspricht, bedeutet eine Einschränkung bezüglich der Abgasgeschwindigkeit und des hydraulischen Durchmessers der Kanäle und damit bezüglich der Leistung des Wabenkatalysators.

Aufgabe der Erfindung ist, Wabenkatalysatoren zur Verfügung zu stellen, deren offene Frontalfläche mehr als 80 % der gesamten Frontalfläche (Frontalfläche der Zellenwände plus Frontalfläche der Kanäle) beträgt, wobei die mechanische Festigkeit der Zellenwände ausreichend hoch sein soll und alle an die Formkörper gestellten Anforderungen, wie insbesondere auch bezüglich einer hohen Porosität, erfüllt. Aufgabe der Erfindung ist ferner, ein Verfahren und eine Vorrichtung aufzuzeigen, mit denen der Wabenkatalysator hergestellt werden kann.

Diese Aufgabe wird durch die Merkmale des Hauptanspruchs sowie die des Anspruchs 11 gelöst. Bevorzugte Weiterbildungen sind in den Unteransprüchen angegeben.

Wesentlich ist, die Scherbenmatrix so dicht wie möglich zu brennen, andererseits aber Sekundärporen in einer bestimmten Menge und mit einer bestimmten Porenverteilung in die Zellenwände einzubringen. Nach der Erfindung weist der keramische Scherben eine geringstmögliche Eigenporosität auf, enthält aber Sekundärporen, die durch einen oder mehrere sogenannte Ausbrennstoffe gebildet worden sind. Die Sekundärporen sind dazu bestimmt, die Oberfläche, die sich rechnerisch aus den geometrischen Abmessungen ergibt, zu vergrößern und ein Volumen zu schaffen, das von den durchströmten Längskanälen direkt zugängig ist und in welches katalytisch wirksame Oxide und Substanzen eingelagert werden können.

Gemäß der Erfindung soll die Kurve der Porengrößenverteilung der Sekundärporen ein Maximum aufweisen, das bei einem Porendurchmesser "a" liegt und einer Gaußschen Verteilung ähnlich ist. Die Verteilung soll so sein, daß unter einem Porendurchmesser von 0,1a möglichst keine Poren mehr vorhanden sind. Die Poren über etwa 6a sollen vorzugsweise auch fehlen, können aber noch in einer Menge von 5 bis 10 % vorhanden sein. Bevorzugt wird ein Wert "a", der zwischen 4.000 und 60.000 nm, insbesondere zwischen 7.000 und 30.000 nm liegt. Die Höhe des Maximums ergibt sich aus dem gewünschten Anteil an Sekundärporen. Der Durchmesser der Poren der Eigenporosität liegt beträchtlich unter 0,1a, und zwar im Bereich von 10 bis 3.000nm. Vorzugsweise beträgt das Verhältnis der Menge der Gesamtporosität zur Menge der Sekundärporosität 1 : 1 bis 6 : 1, insbesondere 1 : 1 bis 2 : 1, wobei sich die Menge der Sekundärporosität bzw. deren Verteilungskurve aus dem gewünschten Volumenanteil der Sekundärporosität errechnet.

Poröse Zellenwände bei Wabenkatalysatoren sind z.B. aus der DE-PS 22 10 438 bekannt Die offene Frontalfläche dieser bekannten Wabenkörper liegt zwischen 30 und 50 %. Die Zellenwände sind porös und weisen Primär- und Sekundärporen auf. Die Primärporen resultieren im wesentlichen aus der Wasserverdängung beim keramischen Brennen des Scherbens und aus Zwickeln zwischen den Kristallen der Minerale, aus denen der Scherben aufgebaut ist. Die Sekundärporen ergeben sich aus den der keramischen Rohmasse zugesetzten Ausbrennstoffen. Die Gesamtporosität der Zellenwandungen soll bei dem bekannten Wabenkörper zwischen 30 und 60 Vol.% im Scherben liegen. Bei einer maximalen offenen Frontalfläche von 50 % sind relativ dicke Zellenwände vorhanden. Es wird festgestellt, daß trotz der hohen Porosität noch eine gute Festigkeit erzielt wird. Die gute Festigkeit wird mit der Regelmäßigkeit des Aufbaus des Wabenkatalysators erklärt. Bei dünnen Wänden bzw. großen offenen Frontalflächen ist bei solchen Zellenwänden mit so hoher Porosität demnach zu erwarten, daß keine ausreichende Festigkeit mehr gewährleistet werden kann.

Im Lichte dieses Standes der Technik erscheint die erfindungsgemäße Maßnahme widersinnig bei den relativ dünnen Zellenwänden, die aus einer offenen Frontalfläche von über 80 % zwangsläufig resultieren eine hohe Sekundärporosität vorzusehen, weil eine Schwächung des Scherbens die unausweichliche Folge sein muß. Die Kombination des dichtgebrannten, nahezu keine oder geringstmögliche Primärporosität aufweisenden Scherbens mit einer Sekundärporosität einer bestimmten Porengrößenverteilung führt aber in überraschender Weise zu einer mechanischen Festigkeit des gebrannten Formkörpers, die so hoch ist, daß sehr dünne Wände bzw. offene Frontalflächen von über 80 % hergestellt werden können.

Bei einem erfindungsgemäßen Wabenkörper, z.B. aus Cordierit, weist der dichtgebrannte Scherben ein spezifisches Gewicht von vorzugsweise 2,55 bis 2,65 g/cm³ auf, wobei die poröse Zellenwandung vorzugsweise eine Rohdichte von 1,00 bis 1,8 g/cm³ besitzt. Die offene Frontalfläche der erfindungsgemäßen Wabenkörper liegt zwischen vorzugsweise 80 und 90 % und die Zellenwanddicke zwischen 0,4 und 1,2 mm. Die Gesamtporosität aus Primär- und Sekundärporosität der Zellenwände beträgt vorzugsweise 30 bis 70 %, insbesondere 50 bis 70 %, und das Raumgewicht des gesamten Wabenkörpers, d.h. einschließlich aller Hohlräume, liegt vorzugsweise zwischen 400 und 800 kg/m³. Bevorzugt werden Wabenkörper mit im Querschnitt quadratischen Kanälen, wobei das Verhältnis zwischen der Wanddicke und der Kantenlänge der Kanäle vorzugsweise 1 : 7 bis 1 : 16, insbesondere 1 : 8 bis 1 : 14, beträgt. Die Wabenkörper sind im Querschnitt vorzugsweise rechteckig ausgebildet und vorzugsweise 300 bis 1.200 mm, gegebenenfalls bis 2.000 mm lang und weisen eine Kantenlänge in der Querschnittsebene von vorzugsweise 100 bis 300 mm auf.

Beispielsweise besteht ein Wabenkörper aus Cordierit und/oder Mullit und/oder Steinzeug und/oder Aluminiumoxid und trägt oder beinhaltet im Scherben katalytisch wirkende Oxide und Substanzen. Die katalytisch wirkenden Stoffe können auch auf den fertigen Wabenkörpern aufgebracht werden.

Die erfindungsgemäßen Wabenkatalysatoren werden aus einer wasserhaltigen plastischen bzw. bildsamen keramischen Rohmasse vorzugsweise durch Strangpressen hergestellt. Dabei wird die Masse durch ein Mundstück gepreßt, das Schlitze aufweist, die den relativ dünnen Wandungen des Wabenkörpers entsprechen. Damit das Strangpressen gelingt, werden die Bestandteile der keramischen Masse auf Korngrößen unter 0,18 mm vermahlen oder entsprechend feine Rohstoffe verwendet. Außerdem wird ein ungewöhnlich hoher Bildsamkeitswert der Masse nach Pfefferkorn zwischen 25 und 27 eingestellt. Ein mit derart dünnen Wandungen von 0,4 bis 1,2 mm, vorzugsweise von 0,5 bis 0,8 mm Dicke stranggepreßter, relativ großer Wabenkörperrohling mit Längen von über 1.000 mm und Querschnittsflächen über 100 cm² ist sehr schwer und kann mit herkömmlichen Mitteln nicht ohne Gefahr von Deformierungen, insbesondere durch Eigengewicht verursacht, gelagert bzw. transportiert werden. Dies ist wohl auch ein Grund dafür, weshalb bisher solche großen Wabenkörper mit derart dünnen Wandungen nicht hergestellt werden. Die Erfindung hat eine Lösung dieses Problems geschaffen, indem der aus dem Mundstück einer geeigneten Presse fließende Strang auf ein Luftkissen extrudiert wird und dort nach dem Ablängen verweilt, bis der Formkörper eine derartige Festigkeit erreicht, daß er gehandhabt werden kann.

Nach einer besonderen Ausführungsform der Erfindung wird ein Luftkissen verwendet, das einen im Querschnitt viereckigen Formkörper auf zwei benachbarten Seitenflächen vorzugsweise vollflächig umgibt, wobei der Formkörper mit einer Längskante senkrecht nach unten weisend auf dem Luftkissen schwebend lagert. Bei einem runden Formkörper wird vorzugsweise ein Luftkissen verwendet, das, den Formkörper im Querschnitt betrachtet, mindestens einen Viertelkreisbogen bis zu einem Halbkreisbogen umgibt Die Luftkissenfläche wird in jedem Fall so groß gewählt, daß der aus der Presse fließende Strang getragen wird, ohne daß Deformationen am Formkörper auftreten, d.h. das Gewicht des Formkörpers wird auf eine möglichst große Luftkissenfläche verteilt. Zur Erzeugung des Luftkissens wird vorzugsweise eine dem Formkörper entsprechend dimensionierte und raumformmäßig angepaßte Rinne verwendet, die eine glatte, gelochte Oberfläche, vorzugsweise aus Metall, aufweist, wobei durch die Löcher Luft in die Rinne gepreßt wird. Die Rinnenoberfläche ist so ausgelegt, daß sie mindestens einen Teil der Unterflächen des Formkörpers umgibt und ein Luftkissen von etwa 0,1 bis 3 mm zwischen der Wandung der Rinne und der Außenwandungsfläche des Formkörpers gebildet wird.

Wenn ein im Querschnitt viereckiger Formkörper, mit einer Längskante nach unten ragend, vorgeschoben und gelagert wird, ist das Eigengewicht auf dem Luftkissen auf zwei Seitenflächen verteilt, so daß auch Formkörper stranggepreßt werden können, die, wenn sie auf einer Fläche lagern würden bzw. ihr Gewicht auf nur einer Fläche wirksam würde, in sich zusammensacken würden. Die gleiche Wirkung der Gewichtsverteilung ergibt sich bei der beschriebenen Unterstützung eines im Querschnitt runden oder ovalen instabilen Wabenkörpers mit einem Luftkissen. Vorteilhaft ist, die Außenwandung des Formkörpers etwas dicker auszubilden als die Zellenwandungen. Zweckmäßig ist ein Verhältnis der Dicke der Außenwandung zur Dicke der Zellenwandungen von 1,05 bis 2,5.

Nach einer weiteren Ausführungsform der Erfindung werden der keramischen Rohmasse mineralische Fasern zugesetzt, und zwar in einer Menge von 0,5 bis 10 Gew.%, bezogen auf die trockene Rohmischung. Bevorzugt betragen die Zusatzmengen 3 bis 5 Gew.%. Insbesondere geeignet sind Glas-, Steinwolle-, Mullit-, Aluminiumoxidfasern u.ä. die z.B. in einer Länge von 0,5 bis 50 mm, vorzugsweise von 3 bis 30 mm, und einer Dicke von 0,002 bis 0,02 mm in die Rohmischung eingebracht und mit der Masse vermengt werden. Die Fasern verleihen dem stranggepreßten Körper eine erhöhte Standfestigkeit unmittelbar nach dem Pressen sowie eine erhöhte Grünfestigkeit unmittelbar nach dem Trocknen und verhindern Rißbildung beim Trocknen und Brennen bis in Temperaturbereiche von etwa 800° C.

Vorzugsweise werden Fasern verwendet, deren Bestandteil mit der keramischen Masse im Brand unter Mineral- und/oder Glasphasenbildung reagieren. Beispielsweise reagieren Glasfasern der Zusammensetzung $SiO_2$ ca. 62 %, $Na_2O$ ca. 16 %, $CaO$ ca. 6 %, $Al_2O_3$ ca. 5 %, $MgO$ ca. 3 % und $B_2O_3$ ca. 6 % derart, daß Poren gebildet werden, die den Abmessungen der Fasern entsprechen. Die Fasersubstanz wird offenbar von der Keramiksubstanz resorbiert, wobei der Brand vorzugsweise so geführt wird, daß die innere Oberfläche der Poren nach dem Brand von einer verglasten Substanz gebildet wird. Diese besondere Struktur des gebrannten Scherbens trägt beachtlich zur Festigkeit des Scherbens bei.

Anhand der Zeichnung wird die Erfindung im folgenden näher erläutert. Es zeigen:

Fig 1 perspektivisch einen Wabenkatalysator,

Fig. 2 einen Ausschnitt aus einer Frontalfläche des Wabenkatalysators,

Fig. 3 eine Darstellung der Porengrößenverteilung der Sekundärporen,

Fig. 4 einen Verfahrensstammbaum zur Herstellung des Wabenkatalysators,

Fig. 5 eine perspektivische Ansicht der Lagervorrichtung für den stranggepreßten Formkörper,

Fig. 6 einen Schnitt entlang der Linie VI-VI in Fig. 5.

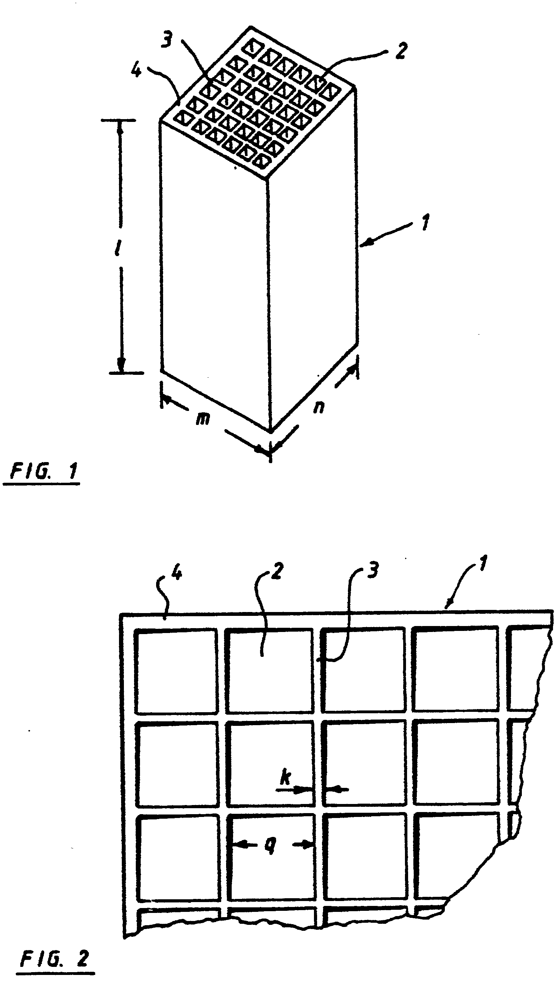

Der in Fig. 1 gezeigte viereckige Formkörper 1 enthält eine Vielzahl von Kanälen 2 von quadratischem Querschnitt, die durch Zellenwände 3 voneinander getrennt sind. Der Formkörper besitzt eine äußere Wand 4. Die Länge 1 kann bis zu 2000 mm betragen. Die äußeren Abmessungen m und n eines solchen Formkörpers können 100 bis 300 mm betragen. Die Formkörper werden mit einer Katalysatorsubstanz getränkt oder beschichtet und in einer größeren Anzahl nebeneinander sowie im Abstand hintereinander, beispielsweise in einem Rauchgasstrom, angeordnet.

Der in Fig. 2 dargestellte Ausschnitt aus der Frontalfläche eines Wabenkatalysators gemäß Fig. 1 zeigt die Wanddicke k der Wände 3 zwischen den Kanälen 2 und die Kantenlänge q der vorzugsweise quadratischen Kanäle. Das Verhältnis k : q kann erfindungsgemäß 1 : 7 bis 1 : 14 betragen. Die äußeren Wände 4 sind dicker als die Zellenwände 3 ausgeführt.

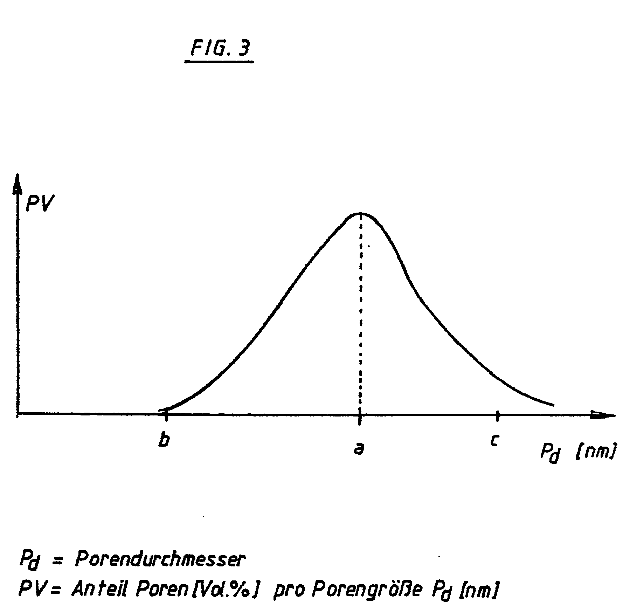

In Fig. 3 ist über der logarithmisch geteilten Abszisse die Verteilung der Sekundärporen mit dem im Maximum liegenden Porendurchmesser a abgebildet. Die Porenverteilung ist einer Gaußschen Verteilung (Glockenkurve) ähnlich, kann aber bei der Größe c, wie angegeben, etwas von der idealen Glockenkurve abweichen. Die meisten Poren liegen bei einem Durchmesser von a. Der Wert b liegt bei 0,1a und der Wert c bei etwa 6a. Bei der dargestellten und als optimal erkannten Porengrößenverteilung ist der Anteil der Poren mit Durchmessern kleiner als b, vorzugsweise nahezu 0. Der Anteil der Poren mit einer Größe größer als c beträgt vorzugsweise nicht mehr als 5 bis 10 %. Die Lage des Wertes a, also des am häufigsten auftretenden Porendurchmessers, kann durch die Wahl geeigneter Porosierungsmittel, d.h. deren Art, Menge und Partikelgröße, eingestellt werden und hängt von der gewünschten Zellenwanddicke und gewünschten Strukturfestigkeit des Wabenkatalysators ab. Der Wert a wird für bestimmte keramische Materialien empirisch ermittelt im Rahmen einer Gesamtporosität (Eigenporosität plus Sekundärporosität) von über 30 Vol.%, vorzugsweise von 50 bis 70 Vol.%.

Die hohe Porosität vergrößert die mit katalytisch wirkender Substanz versehene Oberfläche der Kanäle erheblich und gewährleistet eine für eine lange Nutzungsdauer des Wabenkatalysators ausreichende Menge an Katalysatorsubstanz. Die geringe Wandstärke trägt auch dazu bei, daß die Katalysatorsubstanz nicht in einer Tiefe des Formkörpers angeordnet ist, in der sie keine Wirkung mehr auf den vorbeifließenden Strom des zu behandelnden Mediums ausüben kann. Die geringe Wandstärke und die mit über 80 % offene Frontalfläche verringert den Durchströmungswiderstand gegenüber herkömmlichen Wabenkatalysatoren erheblich.

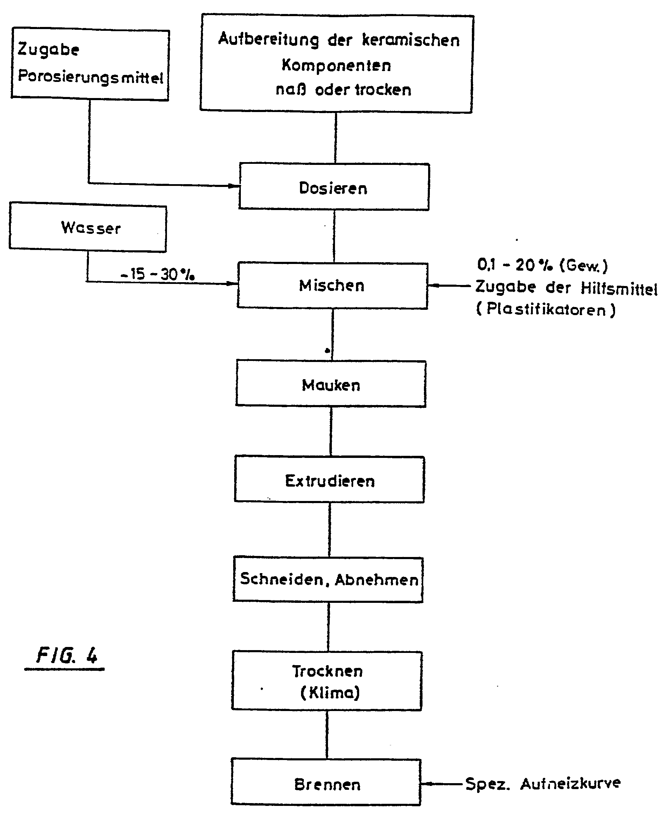

Wie sich aus Fig. 4 ergibt, werden zur Herstellung der erfindungsgemäßen Wabenkatalysatoren zunächst die keramischen Komponenten naß oder trocken aufbereitet. Wesentlich ist, daß erst nach dieser Aufbereitung das Porosierungsmittel zudosiert wird. Dadurch wird gewährleistet, daß sich die angestrebte Porenverteilung einstellt; denn es wird ein Porosierungsmittel mit einer Körnung verwendet, die der Porengrößenverteilung der Sekundärporen entspricht. Die Korngröße und Kornverteilung wird nicht mehr beeinträchtigt, bleibt vielmehr in der keramischen Rohmasse unverändert erhalten. Vorzugsweise wird ein entsprechend vermahlener bzw. gegebenenfalls in der Körnung entsprechend zusammengestellter Petrolkoks verwendet. Geeignet als Porosierungsmittel sind aber auch gemahlene Graphit-, Koks-, Holz-, Zellulose-, Nußschalen- u.a. organische Partikel.

Nach dem Zudosieren von Porosierungsmitteln wird etwa 15 bis 30 Gew.% Wasser zugesetzt und 0,1 bis 20 Gew.%, vorzugsweise 2 bis 6 Gew.% üblicher Plastifikatoren. Die gemischte, homogenisierte, keramische Masse wird gemaukt, wonach ein Bildsamkeitswert nach Pfefferkorn von 25 bis 27 eingestellt ist. Anschließend wird die Masse in eine geeignete Strangpresse gegeben. Aus der Strangpresse wird ein Formkörperstrang auf ein Luftkissen gefördert. Im Falle eines im Querschnitt rechteckigen Formkörperstrangs wird nach einer besonderen Ausführungsform der Erfindung das Mundstück der Strangpresse so angeordnet, daß der Formkörperstrang mit einer Längskante nach unten weisend das Mundstück verläßt. Der Formkörperstrang wird erfindungsgemäß auf einem Luftkissen gelagert und abgelängt. Dabei wird ein Luftkissen verwendet, das die Unterfläche des abgelängten Formkörperrohlings auf einer Flächengröße umgibt, die ausreicht, den Formkörperrohling ohne Deformierung schwebend solange zu lagern, bis er handhabbar bzw. bis die Masse soweit angesteift ist, daß der Formkörperrohling mit anderen üblichen Transportmitteln zum Trocknen weitertransportiert werden kann.

Nach dem Trocknen wird der Formkörperrohling keramisch gebrannt, und zwar so, daß eine geringstmögliche Eigenporosität erzielt wird. Die dafür erforderliche Brennkurve ist auf die zu brennende Masse abzustellen. Beispielsweise kann man bei einer Mullit- oder Steinzeugmasse eine Eigenporosität von 4 bis 12 Vol.% erreichen. Cordieritmassen können bis zu einer Eigenporosität von 10 bis 20 Vol.% gebrannt werden, woraus im Zusammenwirken mit der erfindungsgemäß ausgewählten Sekundärporosität eine überraschend hohe Festigkeit des Scherbens resultiert.

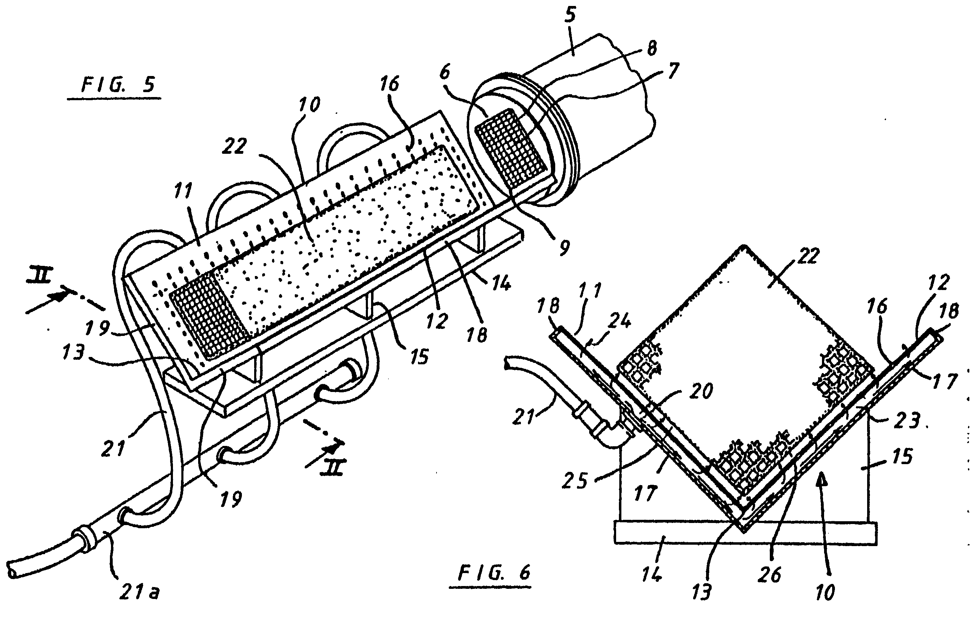

Eine erfindungsgemäße Vorrichtung zur Aufnahme und Lagerung des Formkörperstranges ist in den Fig. 5 und 6 abgebildet. Von der Strangpresse ist lediglich der Auslauf 5 mit dem Mundstück 6 dargestellt. Das Mundstück 6 ist rechteckig und weist Schlitze 7 auf, die sich kreuzend so angeordnet sind, daß quadratische Inselstege 8 zwischen den Schlitzen verbleiben. Wesentlich ist, daß das Mundstück 6 mit der Spitze 9 senkrecht nach unten ragend angeordnet ist.

Die erfindungsgemäße Aufnahme- und Lagervorrichtung besteht aus einer Rinne 10. die zwei v-förmig zueinander positionierte Innenwandungen 11 und 12 aufweist und eine Längskante 13 bilden, die an der tiefsten Stelle der Rinne 10 liegt. Die Rinne 10 lagert z.B. mit Stützen 15 auf einer Platte 14.

Die Rinne 10 ist so vor dem Mundstück angeordnet, daß die Spitze 9 des Mundstücks 6 etwas oberhalb der Längskante 13 und die Rinne 10 selbst in Strangbewegungsrichtung sich erstreckend positioniert sind.

In die Innenwandungen 11 und 12 der Rinne 10 sind zahlreiche kleine Durchgänge 16 eingebracht. Die Innenwandungen 11 und 12 sind Bestandteil eines Rinnenhohlkörpers mit Außenwandungen 17 und Längskantenwandungen 18 sowie Querkantenwandungen 19. Mindestens eine der Außenwandungen 17 ist mit einer Anschlußöffnung 20 für den Anschluß einer Luftleitung 21 ausgerüstet, die zu einem Preßluftzuführungssystem 21a gehört.

In der Rinne 10 lagert ein frischer abgelängter, im Durchschnitt viereckiger Keramikstrangformkörper 22 schwebend auf einem Luftkissen. Das Luftkissen wird durch Preßluft gebildet, die durch die Rohrleitung 21 in den Hohlraum 23 des Rinnenhohlkörpers gedrückt wird. Die Pfeile 24 verdeutlichen, daß die Luft aus den Durchgängen 16 der Innenwandungen 11,12 austritt und unter die Außenflächen 25, 26 des Formkörpers 22 ein Luftkissen bildend drückt, dessen Dicke abhängig ist vom Eigengewicht des Formkörpers 22 und dem dynamischen Druck der aus den Durchgängen 16 austretenden Luft.

Der Formkörper 22 wird in der Rinne schwebend gelagert. Zweckmäßigerweise ist die Raumform der Innenwandungen 11, 12 so ausgebildet, daß der Formkörper 22 an den Außenflächen 25, 26 äquidistant von den Innenwandungen 11, 12 umgeben wird, d.h. daß das Luftkissen überall die gleiche Dicke hat. Dies gilt auch für andere Raumformen des Formkörpers 22, z.B. für runde oder ovale Formkörper.

Die Länge der Rinne kann größer sein als die eines grünen Formkörpers und in verschiedene Segmente unterteilt sein, in denen Luft unabhängig von benachbarten Segmenten ausströmt. Darüber hinaus kann die Luft in den einzelnen Segmenten mit unterschiedlichen Mengen, Temperaturen, Drücken und Geschwindigkeiten aufgegeben werden. Die Luft unter dem Formkörperrohling bewirkt nicht nur eine berührungsfreie Verschiebbarkeit in der Rinne, sondern beeinflußt auch wenigstens das Ansteifen der angeströmten Außenflächen.

Die Erfindung optimiert die offene Frontalfläche eines Wabenkatalysators auf bis über 90 % in Abhängigkeit von einer Verringerung der Zellenwanddicke mit Mitteln, wie hoher Sekundärporosität bei überraschend hoher Festigkeit, die die erzielte Wirkung nicht hätten vermuten lassen. Die Erfindung zeigt außerdem einen Weg auf, wie ein frischer, keramischer Rohling, mit die geforderte offene Frontalfläche und geringe Zellenwanddicke gewährleistenden Dimensionen abgenommen und gelagert werden kann, ohne daß er nach dem Strangpressen unter Eigengewicht zusammenfällt bzw. durch sein Eigengewicht deformiert wird.

Beispiel 1

Es wurden 30 Gew.% Tonkomponenten, 35 Gew.% Schamotte, gemahlen auf Korngrößen kleiner als 100µm, und 35 % MgO-Träger wie Talk und Speckstein trocken gemischt. Zu dieser 100 % Masse wurden 40 Gew.% Ausbrennstoffe, vorzugsweise Petrolkoks mit geeigneter Körnung, 27 Gew.% Wasser und 3 bis 4 Gew.% Plastifikatoren wie z.B. Ligninsulfonate zugemischt und die Plastizität so eingestellt, daß vor dem späteren Strangpressen ein Bildsamkeitswert von 27 nach Pfefferkorn vorlag. Die Masse wurde 4 Tage gemaukt. Dann wurde die Masse zu einem Wabenkörper extrudiert, dessen gesamter Querschnitt 150 × 150 mm betrug, wobei die einzelnen Kanäle einen Querschnitt von etwa 6,75 × 6,75 mm und die inneren Wände eine Dicke von etwa 0,7 mm oder weniger aufwiesen. Die auf 1000 mm abgelängten grünen Rohlinge wurden in der Luftrinne gehalten, bis sie genügend ausgesteift waren und anschließend etwa 54 Stunden getrocknet. Die Formkörper wurden bei langsamem Aufheizen während 10 Tagen bei einer maximalen Brenntemperatur von 1320° C gebrannt. Die fertigen Formkörper bestanden zu mehr als 60 Gew.% aus Cordierit, zu weniger als 30 Gew.% aus Mullit, hatten eine Rohdichte von 1,25 g/cm³ und wiesen eine gesamte Porosität des keramischen Materials von 54 Vol.%, eine mittlere sekundäre Porengröße von 8 000 nm sowie ein Verhältnis von Gesamtporosität zu Sekundärporosität von 1,3 : 1 auf.

Beispiel 2

Das Verfahren nach Beispiel 1 wurde hinsichtlich der Mengen von Ausbrennstoff und Wasser verändert. Es wurden 20 Gew.% Ausbrennstoff und 20 Gew.% Wasser zugegeben. Die Plastizität nach Pfefferkorn betrug 25. Die gebrannten Formkörper hatten eine gesamte Porosität von 40 Vol.%, ein Verhältnis von gesamter zu sekundärer Porosität von 2 : 1 und eine Rohdichte von 1,54 g/cm³.

Beispiel 3

Bei einem Verfahren ähnlich Beispiel 1 bestand die Masse aus 38 Gew.% Tonkomponenten, 37 Gew.% Tonerden und Korund und 25 Gew.% Mullit und Mullitrohstoffen. Es wurden 20 Gew.% Ausbrennstoffe, 22 Gew.% Wasser und 3 Gew.% eines Plastifikators zugegeben und eine Plastizität von 25 nach Pfefferkorn für den Zustand nach viertägigem Mauken eingestellt. Bach Extrusion, Ablängen und Trocknen wurden die Formkörper in 10 Tagen bei maximal 1420° C gebrannt. Die fertigen keramischen Körper zeigten eine gesamte Porosität von 30 Vol.%, eine mittlere Sekundärporengröße von 8.000 nm, ein Verhältnis von gesamter Porosität zu Sekundärporosität von etwa 1 : 1 und eine Rohdichte von 2,10 g/cm³. Die mineralogische Zusammensetzung betrug, soweit feststellbar, über 40 Gew.% Mullit, unter 20 Gew.% α-Korund und kein Cordierit.

Vorstehende Beispiele und weitere Versuche in der Praxis zeigen. daß ein hoher Anteil feinkörniger Ausbrennstoffe einen hohen Bildsamkeitswert ermöglicht und daß die mit dieser höheren Plastizitätszahl steifere Masse zu Formkörpern extrudiert werden kann, deren Wanddicke weniger als 0,5 mm beträgt, ohne daß sich der anfangs sehr weiche, grüne Formling sichtbar verformt. Damit ist die Herstellung äußerst dünnwandiger, hochporöser Wabenkörper mit freien Durchgangsquerschnitten der Kanäle von über 85 % möglich. Die mechanische Festigkeit ist für die vorgesehene Anwendung z.B. in Rauchgaskanälen völlig ausreichend. Bei einem Formkörper mit den Abmessungen gemäß Beispiel 1 lag die Kaltdruckfestigkeit, bezogen auf den gesamten Querschnitt bei 6 N/mm² und ist damit etwa so hoch wie bei einem feuerfesten Leichtstein ohne Kanäle.

## Patentansprüche

1. Katalysatorformkörper aus einem gebrannten keramischen Scherben aus Cordierit und/oder Mullit und/oder Steinzeug und/oder Aluminiumoxid und von wabenförmiger Struktur mit durch Ausbrennstoffe erzeugter Sekundärporosität sowie mit einem offenen Porenvolumen von über 30 %, dadurch gekennzeichnet, daß die offene Gesamtfrontalfläche über 80 % beträgt bei einer Wanddicke (k) der Zellenwände von 0,4 bis 1,2 mm und bei einem Verhältnis von Wanddicke (k) zur Kantenlänge (q) der rechteckigen Kanäle (2) von 1 : 7 bis 1 : 16 und daß die Scherbenmatrix bei einer Gesamtporosität der Zellenwände (3,4) von 30 bis 70 Vol.% ein Verhältnis der Menge der Gesamtporosität zur Menge der Sekundärporosität von 1 : 1 bis 6 : 1 aufweist.

2. Katalysatorformkörper nach Anspruch 1, dadurch gekennzeichnet, daß die Porengrößenverteilung der Sekundärporen einer Gaußschen Verteilung ähnlich ist und ein Maximum bei einem Porendurchmesser "a" aufweist, wobei der Wert "a" zwischen 4 000 und 60 000 nm, vorzugsweise zwischen 7 000 und 30 000 nm liegt, unter einem Porendurchmesser von 0,1 a nahezu keine und mit einem Durchmesser der Sekundärporen von über 6 a nicht mehr als 5 bis 10 % vorhanden sind.

3. Katalysatorformkörper nach Anspruch 2, dadurch gekennzeichnet, daß der Druchmesser der Poren der Eigen porosität im Bereich von 10 bis 3000 nm liegt.

4. Katalysatorformkörper nach einem oder mehreren der Ansprüche 1 bis 3, dadurch gekennzeichnet, daß die Gesamtporosität des Scherbens zwischen 50 und 70 Vol.% liegt.

5. Katalysatorformkörper nach Anspruch 4, dadurch gekennzeichnet, daß der keramische Scherben aus Mullit und/oder Steinzeug besteht und eine Eigenporosität von nicht mehr als 4 bis 12 Vol.% aufweist.

6. Katalysatorformkörper nach Anspruch 4, dadurch gekennzeichnet, daß der Keramikscherben aus Cordierit besteht und eine Eigenporosität von nicht mehr als 10 bis 20 Vol.% aufweist.

7. Katalysatorformkörper nach einem oder mehreren der Ansprüche 1 bis 6, dadurch gekennzeichnet, daß die Rohdichte des Wabenkörpers zwischen 1,0 und 1,8 g/cm² liegt.

8. Katalysatorformkörper nach einem oder mehreren der Ansprüche 1 bis 7, dadurch gekennzeichnet, daß der Wabenkörper im Querschnitt rechteckig ausgebildet ist, eine Länge von 300 bis 2 000 mm und eine Kantenlänge von 100 bis 300 mm aufweist.

9. Katalysatorformkörper nach einem oder mehreren der Ansprüche 1 bis 8, dadurch gekennzeichnet, daß im keramischen Scherben Fasern aus Steinwolle oder keramischem Stoff wie Mullit von einer Länge von 0,5 bis 50 mm, vorzugsweise von 3 bis 30 mm und einer Dicke von 0,002 bis 0,02 mm angeordnet sind, wobei die Fasern in einer Menge von 3 bis 5 Gew.% der keramischen Masse zugesetzt sind.

10. Katalysatorformkörper nach einem oder mehreren der Ansprüche 1 bis 8, gekennzeichnet durch die Struktur von Glasfasern, deren Substanz von der Scherbenmatrix resorbiert ist, so daß anstelle der Glasfasern entsprechend dimensionierte Poren vorhanden sind, wobei die Fasern in einer Menge von 3 bis 5 Gew.-% der keramischen Masse zugesetzt sind.

11. Verfahren zur Herstellung eines Katalysatorformkörpers nach einem oder mehreren der vorangehenden Ansprüche aus einer keramischen Masse, dadurch gekennzeichnet, daß nach der Aufbereitung der keramischen Komponenten ein Porosierungsmittel zugesetzt wird, dessen Menge und Korngrössenverteilung zur Erzielung einer Porosität und Porenverteilung nach den Ansprüchen 1 und 2 geeignet sind und daß 15 bis 30 Gew.-% Wasser und vorzugsweise auch 0,1 bis 20 Gew.-%, vorzugsweise 2 bis 6 Gew.-%, üblicher Plastifikatoren zugesetzt, die Masse gemaukt und danach die Masse bei einem Bildsamkeitswert von 25 bis 27 stranggepreßt, der Formkörperrohling unmittelbar nach dem Strangpressen in einer Rinne auf einem Luftkissen schwebend verschoben und gelagert wird, das 0,1 bis 3 mm dick ist und etwa 30 bis 50% der Längsflächen des Formkörperrohlings auf dessen Unterseite umgibt, dann der Formkörper getrocknet und gebrannt wird.

12. Verfahren nach Anspruch 11, dadurch gekennzeichnet, daß als Porosierungsmittel Petrolkoks zugesetzt wird.

13. Verfahren nach einem oder mehreren der Ansprüche 11 oder 12, dadurch gekennzeichnet, daß ein im Querschnitt viereckiger Formkörperrohling mit einer Längskante senkrecht nach unten weisend aus dem Mundstück einer Strangpresse gedrückt und mit der Längskante nach unten weisend in einer entsprechend geformten Rinne auf dem Luftkissen gelagert wird.

14. Vorrichtung zur Durchführung des Verfahrens nach einem oder mehreren der Ansprüche 11 bis 13 mit einer Strangpresse, dadurch gekennzeichnet, daß unmittelbar dem Mundstück (6) der Strangpresse nachfolgend eine Rinne (10) angeordnet ist, die sich in Strangbewegungsrichtung erstreckt, wobei in die Innenwandungen (11, 12) der Rinne (10) zahlreiche kleine Durchgänge (16) zur Erzeugung eines Luftkissens im Innern der Rinne eingebracht sind und daß die Raumform der Innenwandungen (11, 12) so ausgebildet ist, daß ein Formkörper (22) an den Außenflächen (25, 26) äquidistant von den Innenwandungen (11, 12) umgeben ist, wober zwischen den Wandungen (11, 12) und den Außenflächen (25, 26) ein 0,1 bis 3 mm dickes Luftkissen ausströmender Luft angeordnet ist.

15. Vorrichtung nach Anspruch 14, dadurch gekennzeichnet, daß die vorzugsweise V-förmige Rinne (10) in Längsrichtung in mehrere voneinander unabhängig mit Luft beaufschlagbare Segmente unterteilt ist.

**Claims**

1. Moulded catalyst body, being formed from atrified, ceramic body of cordierite and/or mullite and/or stoneware and/or aluminium oxide and having a lattice-like structure with secondary porosity, which is produced by vitrifying substances, and with an open pore volume of more than 30%, characterised in that the open frontal face amounts to more than 80% of the total frontal face with a cell wall thickness ($k$) of 0.4 to 1.2 mm and with a ratio between the wall thickness ($k$) and the edge length ($q$) of the rectangular channels (2) of 1:7 to 1:16, and in that the body matrix, with a total porosity of the cell walls (3, 4) of 30 to 70% by vol., has a ratio between the amount of total porosity and the amount of secondary porosity of 1:1 to 6:1.

2. Moulded catalyst body according to claim 1, characterised in that the pore size distribution of the secondary pores is similar to a Gaussian distribution and has a maximum with a pore diameter "$a$",

the value "$a$" being between 4 000 and 60 000 nm, preferably between 7 000 and 30 000 nm, and there are virtually no secondary pores below a pore diameter a of 0.1, and there are no more than 5 to 10% of the secondary pores with a pore diameter $a$ of more than 6.

3. Moulded catalyst body according to claim 2, characterised in that the diameter of the pores of the inherent porosity lies in the range of from 10 to 3000 nm.

4. Moulded catalyst body according to one or more of claims 1 to 3, characterised in that the total porosity of the body lies between 50 and 70% by vol.

5. Moulded catalyst body according to claim 4, characterised in that the ceramic body is formed from mullite and/or stoneware and has an inherent porosity of not more than 4 to 12% by vol.

6. Moulded catalyst body according to claim 4, characterised in that the ceramic body is formed from cordierite and has an inherent porosity of not more than 10 to 20% by vol.

7. Moulded catalyst body according to one or more of claims 1 to 6, characterised in that the gross density of the lattice-like body lies between 1.0 and 1.8 g/cm².

8. Moulded catalyst body according to one or more of claims 1 to 7, characterised in that the lattice-like body has a rectangular cross-section, a length of 300 to 2 000 mm and an edge length of 100 to 300 mm.

9. Moulded catalyst body according to one or more of claims 1 to 8, characterised in that fibres of rock-wool or ceramic material, such as mullite, have a length of 0.5 to 50 mm, preferably 3 to 30 mm, and a thickness of 0.002 to 0.02 mm, and they are disposed in the ceramic body, the fibres being added in an amount of 3 to 5% by wt. to the ceramic mass.

10. Moulded catalyst body according to one or more of claims 1 to 8, characterised by the structure of glass fibres, the substance of which is reabsorbed by the body matrix so that, instead of the glass fibres, appropriately dimensioned pores are present, the fibres being added in an amount of 3 to 5% by wt. to the ceramic mass.

11. Method of producing a moulded catalyst body according to one or more of the preceding claims from a ceramic mass, characterised in that, after preparation of the ceramic component, a porous-rendering means is added, th quantity and particle size distribution of which means are suitable for achieving a porosity and pore distribution in accordance with claims 1 and 2, and in that 15 to 30% by wt. water and preferably also 0.1 to 20% by wt., preferably 2 to 6% by wt., conventional plasticisers are added, the mass is fermented, and thereafter the mass is extruded with a coefficient of plasticity of 25 to 27, the moulded body blank is displaced immediately after the extrusion process and mounted so as to be suspended on a cushion of air in a trough, which cushion of air is 0.1 to 3 mm thick and surrounds substantially 30 to 50% of the longitudinal faces of the moulded body blank on its underside, then the moulded body blank on its underside, then the moulded body is dried and vitrified.

12. Method according to claim 11, characterised in that petroleum coke is added as th porous-rendering means.

13. Method according to one or more of claims 11 or 12, characterised in that a moulded body blank, having a quadrilateral cross-section, is extruded from the nozzle of an extrusion press with one longitudinal edge pointing vertically downwardly and is mounted, with the longitudinal edge pointing downwardly, on the cushion of air in an opropriately shaped trough.

14. Apparatus for carrying out the method according to one or more of claims 11 to 13 by utilising an extrusion press, characterised in that a trough (10) is disposed immediately following the nozzle (6) of the extrusion press and extends in the direction of movement of the web, numerous small openings (16) being provided in the internal walls (11, 12) of the trough (10) in order to produce a cushion of air in the interior of the trough, and in that the three-dimensional configuration of the internal walls (11, 12) is such that a moulded body (22) is surrounded by the internal walls (11; 12) at the external faces (25, 26) in an equidistant manner, a cushion of outflowing air being disposed between the walls (11, 12) and the external faces (25, 26) and being 0.1 to 3 mm thick.

15. Apparatus according to claim 14, characterised in that the trough (10), which is preferably V-shaped, is divided longitudinally into a plurality of segments which can be charged with air independently of one another.

## Revendications

1. Corps moulé catalytique constitué d'une pâte céramique cuite formée de cordiérite et/ou de mullite et/ou de grès-cérame et/ou d'oxyde d'aluminium et ayant une structure en nid d'abeilles possédant une porosité secondaire produite par des matières d'autopyrogénation, ainsi qu'un volume de pores ouverts supérieur à 30%, caractérisé en ce que la surface frontale totale ouverte est supérieure à 80% pour une épaisseur (k) des parois des cellules de 0,4 à 1,2 mm et un rapport de l'épaisseur de paroi (k) sur la longeur (q) des côtés des canaux rectangulaires (2) de 1:7 à 1:16, et en ce que la matrice formée par la pâte, pour une porosité globale des parois (3, 4) des cellules de 30 à 70% en volume, présente un rapport de la valeur de la porosité globale sur la valeur de la porosité secondaire de 1:1 à 6:1.

2. Corps moulé catalytique selon la revendication 1, caracterisé en ce que la distribution des tailles des pores secondaires ressemble à une distribution gaussienne et posséde un maximum pour un diamètre "a" des pores, la valeur "a" etant comprise entre 4000 et 60000 nm, de préférence entre 7000 et 30000 nm, et en ce qu'il n'existe presqu'aucun pore possédant un diamètre inférieur à 0,1 a et pas plus de 5 à 10% de pores secondaires possédant un diamètre supérieur à 6a.

3. Corps moulé catalytique selon la revendication 2, caractérisé en ce que le diamètre des pores constituant la porosité propre se situe dans une gamme de 10 à 3000 nm.

4. Corps moulé catalytique selon une ou plusieurs des revendications 1 à 3, caractérisé en ce que la porosité globale de la pâte est comprise entre 50 et 70% en volume.

5. Corps moulé catalytique selon la revendication 4, caractérisé en ce que la pâte céramique est constituée par de la mullite et/ou du grès-cérame et possède une porosité propre d'au plus 4 à 12% en volume.

6. Corps moulé catalytique selon la revendication 4, caractérisé en ce que la pâte céramique est constituée par de la cordiérite et possède une porosité propre d'au plus 10 à 20% en volume.

7. Corps moulé catalytique selon une ou plusieurs des revendications 1 à 6, caractérisé en ce que la densité brute du corps en nid d'abeilles est comprise entre 1,0 et 1,8 g/cm$^2$.

8. Corps moulé catalytique selon une ou plusieurs des revendications 1 à 7, caractérisé en ce que le corps en nid d'abeilles présente une section transversale rectangulaire et possède une longueur de 300 à 2000 mm et une longueur de côté de 100 à 300 mm.

9. Corps moulé catalytique selon une ou plusieurs des revendications 1 à 8, caractérisé en ce que des fibres de laine minérale ou de matière céramique telle que de la mullite, possédant une longueur de 0,5 à 50 mm, de préférence de 3 à 30 mm, et une épaisseur de 0,002 à 0,02 mm, sont disposées dans la pâte céramique, les fibres étant ajoutées en une quantité de 3 à 5% en poids de la masse céramique.

10. Corps moulé catalytique selon une ou plusieurs des revendications 1 à 8, caractérisé par la structure de fibres de verre, dont la substance est résorbée par la matrice formée par la pâte, de sorte que des pores dimensionnés de façon correspondante existent à la place des fibres de verre, les fibres étant ajoutées en une quantité allant de 3 à 5 % en poids de la masse céramique.

11. Procédé pour fabriquer un corps moulé catalytique selon une ou plusieurs des revendications précédentes à partir d'une masse céramique, caractérisé en ce qu'après la préparation des composants céramiques, on ajoute un agent de porosité dont la quantité et la distribution de la taille des grains conviennent pour l'obtention d'une porosité et d'une distribution des pores selon les revendications 1 et 2, et en ce qu'on ajoute 15 à 30% en poids d'eau et de préférence également 0,1 à 20% en poids, de préférence 2 à 6% en poids d'agents plastifiants usuels, on fait fermenter la masse et on l'extrude ensuite à une valeur de ductilité de 25 à 27, on déplace et on place l'ébauche de corps moulé, aussitôt après l'extrusion, dans une goulotte, en suspension sur un coussin d'air qui possède une épaisseur de 0,1 à 3 mm et entoure environ 30 à 50% des surfaces longitudinales de l'ébauche de corps moulé, sur la face inferieure de cette dernière, puis on fait sécher et on cuit le corps moulé.

12. Procédé selon la revendication 11, caractérisé en ce qu'on ajoute du coke de pétrole comme agent de porosité.

13. Procédé selon une ou plusieurs des revendications 11 ou 12, caractérisé en ce qu'on repousse une ébauche de corps moulé de section transversale carrée comportant une arête longitudinale dirigée vers le bas, dans un plan vertical, hors de l'embouchure d'une extrudeuse et en ce qu'on place l'arête longitudinale dirigée vers le bas, sur le coussin d'air, dans une gouttière de forme appropriée.

14. Dispositif pour la mise en œuvre du procédé selon une ou plusieurs des revendications 11 à 13 à l'aide d'une extrudeuse, caractérisé en ce que directement en aval de l'embouchure (6) de l'extrudeuse est disposée une gouttière (10) qui s'étend dans la direction de déplacement du boudin, un grand nombre de petits passages (16) étant ménagés dans les parois intérieures (11, 12) de la gouttière (10) pour produire un coussin d'air à l'intérieur de celle-ci, et en ce que la forme spatiale des parois intérieures (11, 12) est agencée de telle sorte que les surfaces extérieures (25, 26) du corps moulé (22) sont entourées par les parois intérieures (11, 12), à égale distance de ces parois, un coussin d'air en écoulement d'une épaisseur de 0,1 à 3 mm étant situé entre les parois (11, 22) et les surfaces extérieures (25, 26).

15. Dispositif selon la revendication 14, caractérisé en ce que la gouttière (10), qui possède de préférence une forme en V, est subdivisée dans sa direction longitudinale en plusieurs segments pouvant être alimentés en air indépendamment les uns des autres.

FIG. 1

FIG. 2

FIG. 3

$P_d$ = Porendurchmesser
PV = Anteil Poren [Vol.%] pro Porengröße $P_d$ [nm]

EP 0 260 704 B1

Zugabe Porosierungsmittel

Aufbereitung der keramischen Komponenten naß oder trocken

Dosieren

Wasser

-15 - 30 %

Mischen ← 0,1 - 20 % (Gew.) Zugabe der Hilfsmittel ( Plastifikatoren )

Mauken

Extrudieren

Schneiden, Abnehmen

*FIG. 4*

Trocknen (Klima)

Brennen ← Spez. Aufheizkurve

FIG. 5

5
8
16
7
6
10
9
22
14
11
12
18
19
13
15
19
21
21a

EP 0 260 704 B1

22
18
11
24
12
18
16
17
20
21
23
25
15
17
14
13
26
10

FIG. 6